# EUROPEAN PATENT APPLICATION

(11) **EP 4 407 341 A1**
(43) Date of publication of application: **31.07.2024**
(21) Application number: 24153622.6
(22) Date of filing: 24.01.2024
(51) Int. Cl.: G01S 7/481, G01S 17/89

(54) **IMAGE-CAPTURING DEVICE, DISTANCE-MEASURING APPARATUS, AND DISTANCE-MEASURING SYSTEM**

(30) Priority: 25.01.2023 JP 2023009747; 01.12.2023 JP 2023204232
(71) Applicant: Ricoh Company, Ltd., Tokyo 143-8555 (JP)
(72) Inventor: IKEDA, Keisuke, Tokyo, 143-8555 (JP); SATOH, Hiroyuki, Tokyo, 143-8555 (JP); HATAZAKI, Soya, Tokyo, 143-8555 (JP); NAKAMURA, Naoto, Tokyo, 143-8555 (JP)
(74) Representative: SSM Sandmair

(57) **Abstract**

An image-capturing device (1001) includes: a casing (11) elongated in one direction; a light receiver (61) on one end of the casing in said one direction, a support on another end of the casing in said one direction; and a light emitter (21) between the light receiver (61) and the support in said one direction of the casing, to emit patterned light to a target object. The light receiver (61) receives the patterned light reflected from the target object and is preferably able to capture an image covering 360 degrees around the casing in a plane orthogonal to said one direction. The image-capturing device (1001) has a blind spot at the lower portion to prevent light emitted from the light emitter (21) at the lower side relative to the ToF light receiver (61) from directly entering the ToF light receiver (61). The image-capturing device (1001) has a step (11a) in the casing (11) with which the ToF light receiver (61) and the light emitter (21) form a step therebetween in the optical system. The image-capturing device (1001) including the step (11a) in the casing (11) blocks incident light at an angle of view of -60 degrees or less from the ToF light receiver (61), creating a blind spot. This configuration allows the ToF light receiver (61) to avoid receiving patterned light at a maximum angle of view emitted from the light emitter (21).

## Description

### BACKGROUND

### Technical Field

Embodiments of the present disclosure relate to an image-capturing device, a distance-measuring apparatus, and a distance-measuring system.

### Related Art

One of the methods for measuring the distance from an imaging apparatus to an object is known as the Time of Flight (ToF) method, which calculates the distance to the object based on the time taken for light to be emitted, reflected, and then received. An image-capturing device utilizing the ToF has been developed for acquiring distance information. Such an image-capturing device employs a light receiver that includes a ToF sensor and a light emitter that includes a laser source, serving as a distance-measuring apparatus to perform distance measurement. The ToF image-capturing devices are used, for example, in vehicles for detecting an obstacle, or acquiring spatial information in a structure.

Japanese Unexamined Patent Application Publication No. 2019-113530 discloses a ToF distance-measuring apparatus to accurately acquire distance information in scenes where various objects with significantly different reflectances and distances coexist. The ToF distance-measuring apparatus includes an illumination unit (or a structured illumination) to project a spatial irradiation pattern with an area of high emission (or dot-like emission) and an area of low emission (or uniform light emission).

Such a distance-measuring apparatus disclosed by Japanese Unexamined Patent Application Publication No. 2019-113530, which projects a spatial irradiation pattern with the high-emission area and the low-emission area, can acquire accurate distance information by achieving a sufficient signal-to-noise ratio (S/N) through return light from the high-emission area irrespective of insufficient S/N through return light from the low-emission area for distance information.

The distance-measuring apparatus disclosed by Japanese Unexamined Patent Application Publication No. 2019-113530 further receives return light at a level that prevents the saturation of the photodetector with light from the low-emission area. This still achieves the acquisition of accurate distance information irrespective of excessively strong return light from the high-emission area in situations where reflectances are high or the target object is close.

However, a typical ToF image-capturing apparatus might face the challenge that dot pattern light received by the light receiver excessively converges in areas within the field of view intended for distance measurement. This results from the misalignment of the optical axes of the illumination unit and the light receiver. As described above, the typical ToF image-capturing apparatus might cause a situation where, if the dot light rays received on the photodetector are too close to each other, the dots may connect and cease to function as a distinct dot pattern. This results in failure to accurately acquire distance information.

### SUMMARY

In view of the above, it is an objective of the present disclosure to acquire accurate distance information by excluding areas within the field of view intended for distance measurement where the dot pattern light received by the light receiver is overly concentrated in a ToF image-capturing device where an illumination unit emitting dot pattern light and a light receiver have misaligned optical axes.

An embodiment of the present disclosure provides an image-capturing device includes: a casing elongated in one direction; a light receiver on one end of the casing in said one direction, a support on another end of the casing in said one direction; and a light emitter between the light receiver and the support in said one direction of the casing, to emit patterned light to a target object. The light receiver receives the patterned light reflected from the target obj ect.

An embodiment of the present disclosure provides a distance-measuring system including: the above-described image-capturing device; and a processor to calculate a distance to the target object based on the patterned light received by the light receiver.

An embodiment of the present disclosure provides a distance-measuring system including: the above-described image-capturing device; and a processor to calculate a distance to the target object based on the patterned light received by the light receiver.

According to one aspect of the present disclosure, in a ToF image-capturing device where an illumination unit emitting dot pattern light and a light receiver have misaligned optical axes, areas within the field of view intended for distance measurement can be excluded, where the dot pattern light received by the light receiver is overly concentrated. This allows for the acquisition of accurate distance information.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a diagram of a configuration of a distance-measuring system according to a first embodiment of the present disclosure;
FIG. 2 is a perspective view of the external appearance of an image-capturing device included in the distance-measuring system in FIG. 1 according to the first embodiment;
FIGS. 3A and 3B are diagrams illustrating a schematic configuration of the image-capturing device in FIG. 2, according to an embodiment of the present disclosure;
FIG. 4 is a diagram of the arrangement of optical systems included in the image-capturing device in FIG. 2, according to an embodiment of the present disclosure;
FIG. 5 is a block diagram of a functional configuration of a processor incorporated in the distance-measuring system in FIG. 1 according to the first embodiment;
FIGS. 6A and 6B are diagrams each illustrating how an image-capturing device is supported, according to embodiments of the present disclosure;
FIG. 7 is a diagram of a blind spot of the image-capturing device in FIG. 2, according to an embodiment of the present disclosure;
FIG. 8-1 is a diagram of a desirable dot pattern image according to an embodiment of the present disclosure;
FIG. 8-2 is a diagram of a dot pattern image with varying densities of dots due to parallax, according to an embodiment of the present disclosure;
FIG. 9-1 is a diagram illustrating the illumination of a close flat measurement-target object according to an embodiment of the present disclosure;
FIGS. 9-2A to 9-2C are graphs of a pitch between adjacent dots according to embodiments of the present disclosure.
FIG. 10 is a diagram of a blind spot of a ToF camera according to an embodiment of the present disclosure;
FIG. 11 is a graph of the relation between the ToF angle of view and the DId ratio according to an embodiment of the present disclosure;
FIG. 12 is a diagram of a support of an image-capturing device, according to another embodiment of the present disclosure;
FIG. 13 is a diagram of the arrangement of optical elements in an image-capturing device according to another embodiment of the present disclosure;
FIG. 14 is a diagram of a configuration of a distance-measuring system according to a second embodiment of the present disclosure;
FIG. 15 is a diagram of a configuration of a distance-measuring system according to a third embodiment of the present disclosure;
FIG. 16 is a diagram of a configuration of a distance-measuring system according to a modification of the third embodiment in FIG. 15;
FIG. 17 is a diagram of a configuration of a distance-measuring system according to another modification of the third embodiment in FIG. 15;
FIG. 18 is a block diagram of a functional configuration of a processor incorporated in the distance-measuring system in FIG. 15 according to the third embodiment;
FIGS. 19A and 19B are diagrams of a configuration of a distance-measuring system according to a fourth embodiment of the present disclosure;
FIG. 20 is a diagram of the effects of the hand-held shake according to an embodiment of the present disclosure;
FIG. 21 is a diagram of a configuration of a distance-measuring system according to a fifth embodiment of the present disclosure;
FIG. 22 is a diagram of a configuration of a distance-measuring system according to a modification of the fifth embodiment in FIG. 21;
FIG. 23 is a diagram of a configuration of a distance-measuring system according to another modification of the fifth embodiment in FIG. 21;
FIG. 24 is a diagram of an overlap of patterned light rays according to an embodiment of the present disclosure;
FIG. 25 is a diagram of a light shield according to a sixth embodiment of the present disclosure;
FIG. 26 is a diagram of a light shield according to a modification of the sixth embodiment in FIG. 25;
FIG. 27 is a diagram of a light shield according to another modification of the sixth embodiment in FIG. 25;
FIGS. 28A and 28B are diagrams of a light shield according to still another modification of the sixth embodiment in FIG. 25; and
FIG. 29 is a diagram of a configuration of a distance-measuring system according to a seventh embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of an image-capturing device, a distance-measuring apparatus, and a distance-measuring system are described with reference to the accompanying drawings.

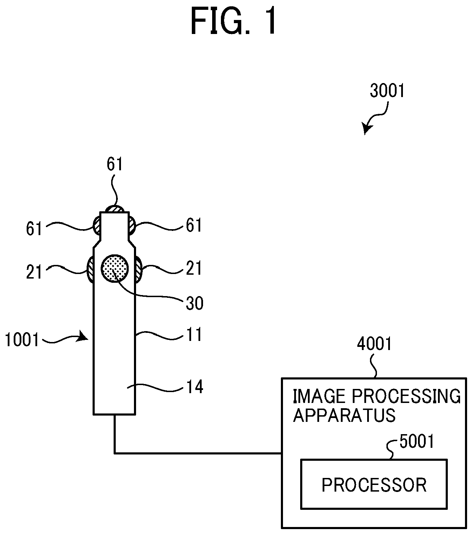

FIG. 1 is a diagram of a system configuration of a distance-measuring system 3001 including an image-capturing device 1001 and an information processing apparatus 4001 according to a first embodiment of the present disclosure. As illustrated in FIG. 1, the distance-measuring system 3001 has a system configuration that connects the image-capturing device 1001 with the information processing apparatus 4001 such as a personal computer (PC) and cloud. The distance-measuring system 3001 performs, for example, ToF image-capturing with the image-capturing device 1001 and also performs distance measurement processing based on the data acquired by the image-capturing device 1001 using the information processing apparatus 4001. The image-capturing device 1001 and the information processing apparatus 4001 communicate with each other by wired communication or wireless communication using the transmission/reception units of the image-capturing device 1001 and the information processing apparatus 4001. In some embodiments, data is transmitted (or output) from the image-capturing device 1001 to the information processing apparatus 4001 via a network, and the transmission/reception unit is configured by an interface circuit for, for example, a portable storage medium such as a secure digital (SD) card or a PC.

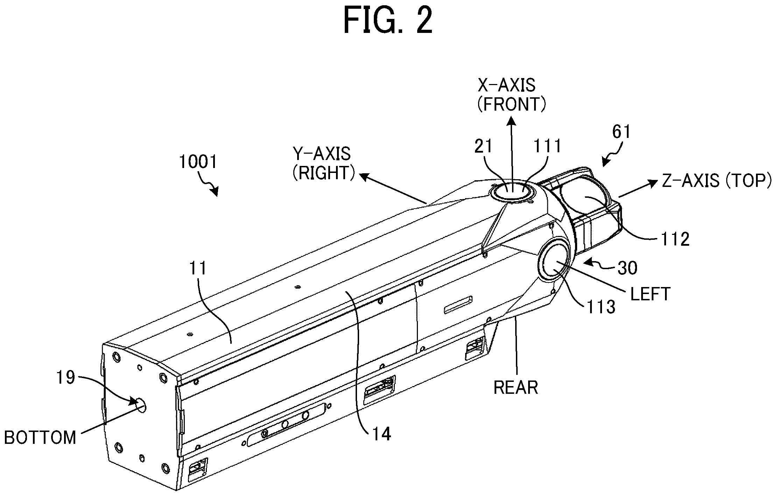

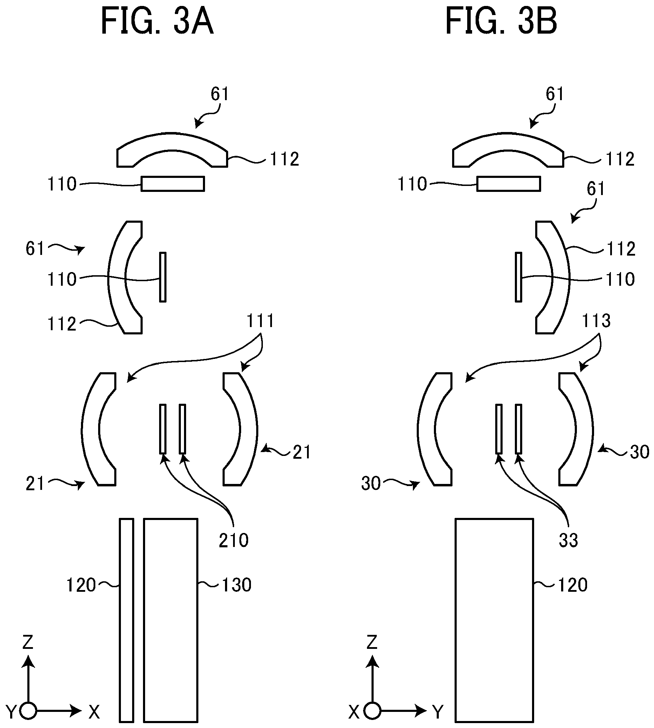

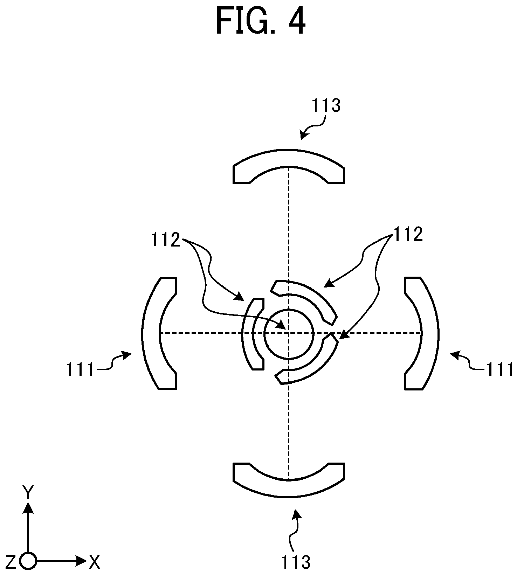

FIG. 2 is a perspective view of the external appearance of the image-capturing device 1001 in FIG. 1 according to the first embodiment. FIGS. 3A and 3B are diagrams of a configuration of the image-capturing device 1001 in FIG. 2, according to an embodiment of the present disclosure. FIG. 4 is a diagram of the arrangement of optical systems included in the image-capturing device 1001 in FIG. 2, according to an embodiment of the present disclosure. In the present embodiment, the image-capturing device 1001 functions as both a ToF distance-measuring apparatus (e.g., a ToF camera) and a luminance camera (e.g., a Red, Green, Blue (RGB) camera) to capture full-sphere images using both the ToF camera and the luminance camera.

As illustrated in FIGS. 2 to 4, the image-capturing device 1001 includes a light emitter 21, a ToF light receiver 61, a luminance light receiver 30, and a controller 120. The light emitter 21 and the ToF light receiver 61 serve as a ToF distance-measuring apparatus, or the ToF camera. The luminance light receiver 30 serves as a luminance camera.

The light emitter 21 emits distance-measuring light (e.g., infrared light) toward a measurement target area. The light emitter 21 includes a light source 210 that emits infrared light and a ToF light-emitting system 111 (or a projection optical system) that includes an optical element to increase a divergence angle. The light emitter 21 emits light from the light source 210 at a wide angle. The optical element of the ToF light-emitting system 111 includes, for example, a lens, a diffractive optical element (DOE), and a diffusion plate. The light source 210 is, for example, a two-dimensional array of vertical-cavity surface-emitting lasers (VCSELs). In the present embodiment, the image-capturing device 1001 includes two light emitters 21 facing in opposite directions to each other.

The two light emitters 21 serve as a structured lighting device that emits patterned light (e.g., dot pattern light in the present embodiment), which is structured light into the space. In other words, the two light emitters 21 project point lights (or spotlights). Ideally, the areas illuminated with light are distinct from non-illuminated areas. However, in reality, due to some extent of light spread and a small amount of muti-path interference in the spotlight, the contrast difference between the points of reflected spotlight received by a ToF sensor 110 to be described below and the other areas is not "100 : 0".

The distance-measuring light (or structured light) emitted from the light emitter 21 is reflected from an object that is present in the measurement target area. The ToF light receiver 61 receives light reflected from an object in the measurement target area. The ToF light receiver 61 includes a ToF sensor 110 and a ToF light-receiving optical system 112 (or a first light-receiving optical system). The ToF sensor 110 has sensitivity to the distance-measuring light. The ToF light-receiving optical system 112 includes an optical element that guides incident light to the ToF sensor 110. The optical element of the ToF light-receiving optical system 112 includes, for example, a lens. The ToF sensor 110 is a light-receiving element that includes light-receiving pixels two-dimensionally arrayed. As the light-receiving pixels correspond to the positions within the measurement target area, the ToF light receiver 61 individually receives light rays from the positions within the measurement target area. In the present embodiment, the image-capturing device 1001 includes four ToF light receivers 61 facing in different directions. The four ToF light receivers 61 capture an image of 360 degrees around a first direction that is along the Z-axis. Multiple light emitters 21 and multiple ToF light receivers 61 are disposed around the first direction (or the Z-axis) of the casing 11.

The luminance light receiver 30 acquires a two-dimensional image using a Complementary Metal Oxide Semiconductor (CMOS) sensor 33. The luminance light receiver 30 includes the CMOS sensor 33 and a luminance light-receiving optical system 113 (or a second light-receiving optical system). The CMOS sensor 33 captures a luminance image (or a RGB image). The luminance light-receiving optical system 113 includes an optical element that guides incident light to the CMOS sensor 33. The optical element of the luminance light-receiving optical system 113 includes, for example, a lens.

In the present embodiment, the image-capturing device 1001 captures a distance image using light data received by the ToF light receiver 61 and a luminance image (or RGB image) using light data received by the luminance light receiver 30. A processor to be described later maps the luminance image (or the RGB image) onto the set of coordinate points obtained from the distance image. Thus, the distance-measuring system 3001 converts the distance and shape information of the surrounding space into digital data with color information.

The controller 120 drives or controls the light emitter 21, the ToF light receiver 61, and the luminance light receiver 30. The controller 120 is connected to the light source 210, the ToF sensor 110, and the CMOS sensor 33 by, for example, a cable, a flexible printed circuit (FPC), or a flat flexible cable (FFC).

The light emitter 21 serves as a first light emitter that emits structured light. The ToF light receiver 61 serves as a first light receiver on which light (or incident light), including the structured light, strikes. The luminance light receiver 30 serves as a second light receiver that receives information including at least luminance.

In the present embodiment, as illustrated in FIGS. 2 to 4, the image-capturing device 1001 has a longitudinal shape elongated in the Z-axis direction. In the first stage of the image-capturing device 1001, which is the farthest portion of the image-capturing device 1001 in the +Z-direction, four ToF light-receiving optical systems 112 are disposed, each with an angle of view of 120 degrees. Of the four ToF light-receiving optical systems 112, three ToF light-receiving optical systems 112 face in three directions within the XY plane, and one ToF light-receiving optical system 112 faces in one direction that is the +Z-direction. In the second stage of the image-capturing device 1001, which is on the -Z-side relative to the first stage, two ToF light-emitting systems 111 and two luminance light-receiving optical systems 113 are disposed each with an angle of view of 180 degrees or more. The two ToF light-emitting systems 111 face in opposite directions (e.g., +X-direction and -X-direction in the present embodiment), and the two luminance light-receiving optical systems 113 also face in opposite directions (e.g., +Y-direction and -Y-direction in the present embodiment). In the third stage of the image-capturing device 1001, which is on the -Z-side relative to the first stage, the controller 120 and a battery 130 are disposed. This allows the compact arrangement of the optical systems that cover the entire celestial sphere and enables the miniaturization of the image-capturing device.

The controller 120 controls the timing of the emission by the light emitter 21 and detects light received by the ToF light receiver 61. The controller 120 first controls the timing of driving the light source 210 to emit light toward the measurement target area. The controller 120 further acquires light data obtained by photoelectric conversion of light received by the ToF sensor 110. At the same time, the controller 120 acquires a luminance image captured by the CMOS sensor 33.

When using a ToF sensor directly as the ToF sensor 110, the controller 120 acquires data including, for example, information on the timing of light reception at each pixel. When using a ToF sensor indirectly as the ToF sensor 110, the controller 120 acquires phase images based on the amount of light received by the pixels in, for example, four different phases. A distance image is generated from four phase images by a processor to be described later.

Data acquired by the image-capturing device 1001 is input to a processor 5001 included in the information processing apparatus 4001. The processor 5001 includes a central processing unit (CPU), a read-only memory (ROM), a random-access memory (RAM), and a solid-state drive (SSD) of the information processing apparatus 400.

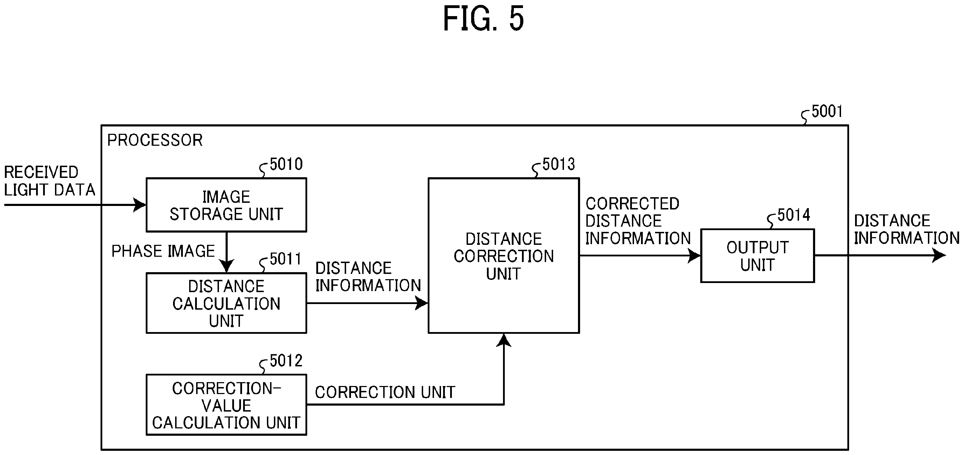

FIG. 5 is a block diagram of a functional configuration of the processor 5001 according to the first embodiment that calculates the distance to a target object based on light data received by the ToF light receiver 61. As illustrated in FIG. 5, the processor 5001 implements an image storing unit 5010, a distance calculation unit 5011, a correction-value calculation unit 5012, a distance correction unit 5013, and an output unit 5014.

The image storing unit 5010 stores light data (e.g., the multiple phase images created based on the light data) received by the ToF light receiver 61 in a storage unit such as the RAM. The distance calculation unit 5011 acquires distance information by calculating the distance to the target object based on multiple phase images stored in the storage unit by the image storing unit 5010. The correction-value calculation unit 5012 calculates a correction value for correcting the distance information, for example, using information obtained from a first area and a second area (or the remaining area) in the distance image acquired by the distance calculation unit 5011 after the emission of light from the light emitter 21. The first area receives the light that is directly reflected from a target object after being emitted as spotlight, whereas the second area does not receive the light that has undergone such a direct reflection. The distance correction unit 5013 corrects the distance information obtained through the emission of light from the light emitter 21, using the correction value calculated by the correction-value calculation unit 5012. In some embodiments, the correction-value calculation unit 5012 and the distance correction unit 5013 are not involved. However, such correction processing achieves multipath reduction.

The output unit 5014 outputs distance information indicating the distance to the target object corrected by the distance correction unit 5013 to an external device.

Several examples of how the image-capturing device 1001 is supported are described below.

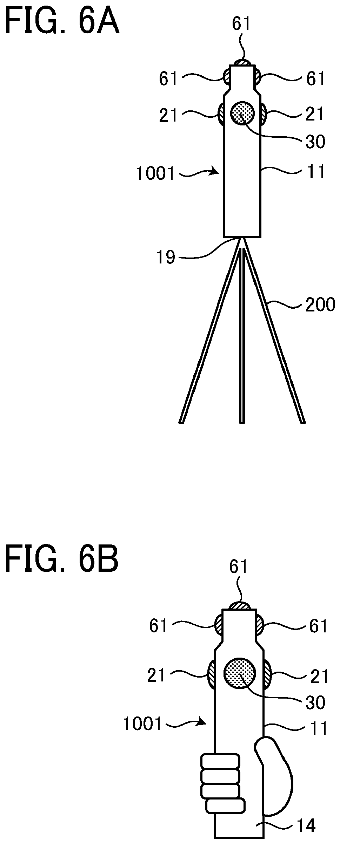

FIGS. 6A and 6B are diagrams each illustrating how the image-capturing device 1001 is supported according to embodiments of the present disclosure. As illustrated in FIG. 6A, the image-capturing device 1001 includes an attachment section 19 (see FIG. 2) such as a screw hole for attaching a tool 200 such as a tripod to the bottom of the casing 11. As illustrated in FIG. 6A, the image-capturing device 1001 is supported by the tool 200 serving as a support (e.g., a tripod) attached to the attachment section 19 in the casing 11. In this configuration, the image-capturing device 1001 includes the ToF light receiver 61, the light emitter 21, and the support, which are sequentially located at different positions of the casing 11 in the first direction (or the Z-axis).

As illustrated in FIG. 6B, the image-capturing device 1001 includes a grip 14, which is gripped by a user's hand, at a lower portion relative to the light emitter 21 and the luminance light receiver 30 in the casing 11. As illustrated in FIG. 6B, the image-capturing device 1001 is supported by the user's hand gripping the grip 14 that serves as the support.

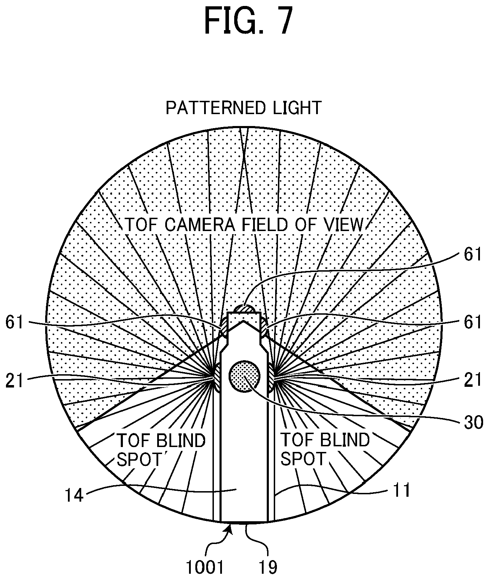

FIG. 7 is a diagram of a blind spot of the image-capturing device 1001 according to an embodiment of the present disclosure. As described above, the image-capturing device 1001 according to the present embodiment includes multiple ToF light receivers 61 facing in different directions and multiple light emitters 21 facing in different directions. This configuration allows the acquisition of a distance image around the image-capturing device 1001 over a wide range. However, as illustrated in FIG. 7, the image-capturing device 1001 has a blind spot (or a ToF blind spot in FIG. 7) that is a non-image capturing area in the direction where the light emitter 21 and the support are located, to prevent light from the light emitter 21 reaching the ToF light receiver 61 and interference by the support with light to the ToF light receiver 61.

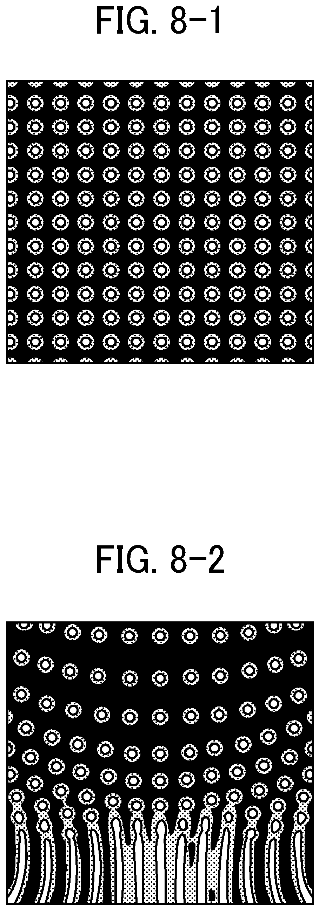

FIG. 8-1 is a diagram of a desirable dot pattern image according to an embodiment of the present disclosure. FIG. 8-2 is a diagram of an actual dot pattern image with varying densities of dots due to parallax according to an embodiment of the present disclosure.

The desirable dot pattern image as illustrated in FIG. 8-1 is obtained when the ToF sensor 110 included in the ToF light receiver 61 receives the reflected dot pattern light emitted from the light emitter 21 onto a close flat measurement-target object. However, in reality, when measuring the distance to a particularly close measurement target object, an image with the distribution of dot densities as illustrated in FIG. 8-2 results from the parallax created by the positional difference between the ToF light receiver 61 and the light emitter 21.

As illustrated in FIG. 6, when the ToF light receiver 61 is located above the light emitter 21, or the ToF light receiver 61 and the light emitter 21 are not placed at the same location during the use of the image-capturing device 1001, the dot pattern becomes dense in the pixels of the ToF sensor 110 corresponding to a ranging point as viewed from the ToF camera, as in FIG. 8-2.

In such an area where the dot pattern is dense, the reflected light of multiple dots enters a single pixel, and the dots become inseparable. This causes an overlap of medium-to-high illumination areas over a low-illumination area, eliminating the low-illumination area. This causes difficulties in measuring the distance to a close-range object due to the absence of the low-illumination area in the above-described ToF distance-measuring apparatus that projects a spatial irradiation pattern with the high-emission area and the low-emission area. In other words, acquiring accurate distance information using dot pattern light is difficult to achieve.

Of the dot-pattern light received by the ToF sensor 110 in the ToF light receiver 61, some dot-pattern light rays are too close to each other on the ToF sensor 110. This causes a connection between dots, resulting in a higher dot density and rendering the dot pattern non-functional. As such a higher dot density is positioned within the blind spot of the ToF camera at the lower side relative to the ToF light receiver 61, the dot-pattern light rays that are too close to each other are not present in the angle of view of the ToF camera. This might hamper the accurate acquisition of distance information.

The following describes such challenges in detail.

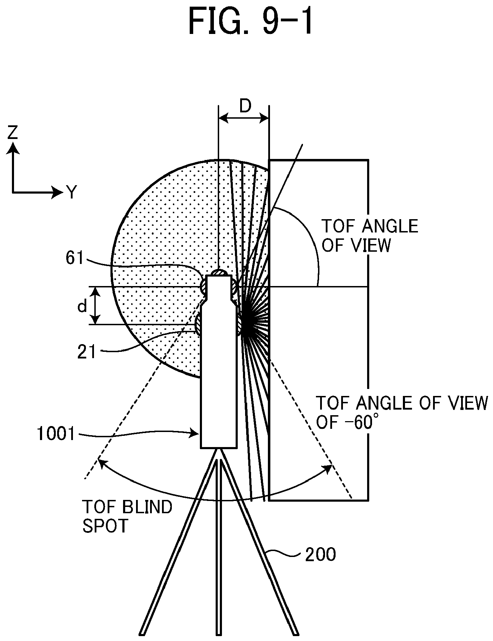

FIG. 9-1 is a diagram illustrating the illumination of a close flat measurement-target object according to an embodiment of the present disclosure. As illustrated in FIG. 9-1, for example, it is assumed that a distance image of the flat measurement-target object located at a distance D in the Y-direction from the light-receiving surface of the ToF sensor 110 in the ToF light receiver 61. In the image-capturing device 1001 of FIG. 9-1, the optical axes of the ToF light receiver 61 and the light emitter 21 are spaced apart by a distance d in the Z-direction. Further, the light emitter 21 is at the -Z-side (i.e., the lower side in FIG. 9-1) relative to the ToF light receiver 61. For example, it is assumed that the dot pattern light emitted from the light emitter 21 is emitted at intervals of 5 degrees. The image-capturing device 1001 of FIG. 9-1 includes a tool 200 (e.g., a tripod) attached to the -Z-side relative to the light emitter 21.

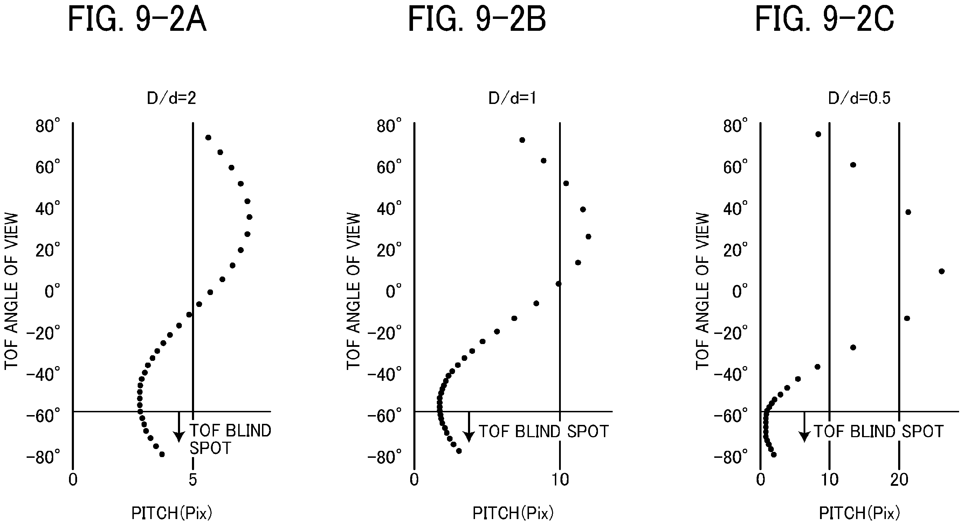

FIGS. 9-2A to 9-2C are graphs of a pitch between adjacent dots according to an embodiment of the present disclosure.

FIGS. 9-2A to 9-2C presents pitches between adjacent dots with a variation in the distance D from the light-receiving surface of the ToF sensor 110 of the ToF light receiver 61 in the image-capturing device 1001 of FIG. 9-1in the Y-direction. More specifically, FIGS. 9-2A to 9-2C present the angles of view at which the ToF light receiver 61 receives the reflected light rays from the dot pattern light for DId ratios of 0.5, 1, and 2. Further, FIGS. 9-2A to 9-2C present the numbers of pixels corresponding to the pitches between adjacent dot images on the ToF sensor 110 in the ToF light receiver 61.

As presented in FIGS. 9-2A to 9-2C, the deviation in pitch becomes more pronounced as the DId ratio decreases. With DId of 0.5, an area where the pitch between adjacent dot images is one pixel or less occurs at an angle of view of -60 degrees or less. In such an area, parts of multiple dot images overlap on one pixel, and thus a non-illumination area between dots is lost on the ToF sensor 110 in the ToF light receiver 61. As described above, acquiring accurate distance information using dot pattern light is difficult to achieve.

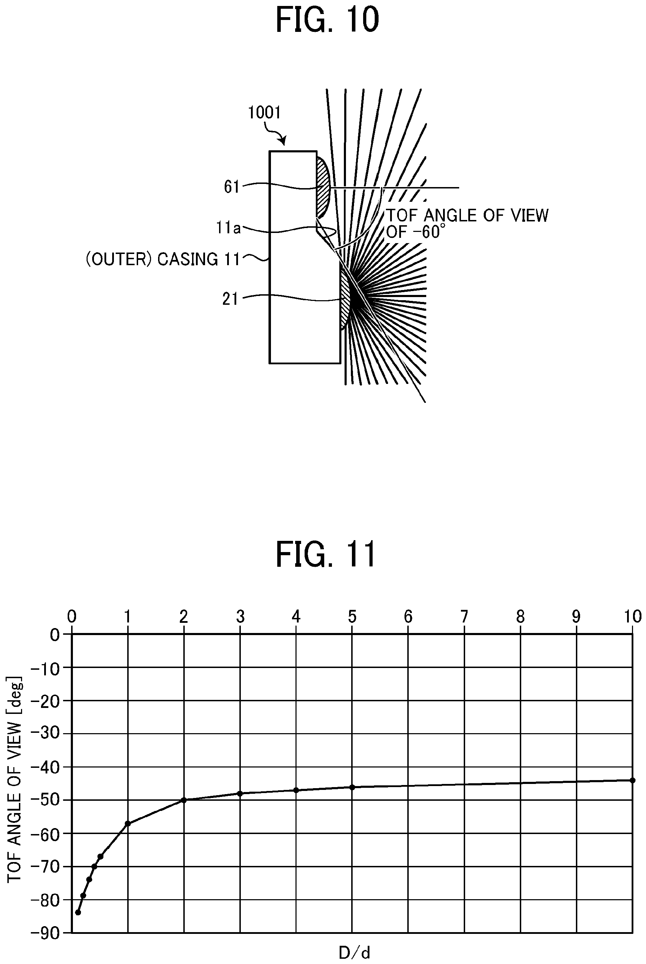

FIG. 10 is a diagram of a blind spot of a ToF camera according to an embodiment of the present disclosure. As described above, the image-capturing device 1001 according to the present embodiment has a bind spot at the lower portion of FIG. 10 to prevent light emitted from the light emitter 21 at the lower side relative to the ToF light receiver 61 from directly entering the ToF light receiver 61 and also prevent the tool 200 such as a tripod from being reflected in a captured image. More specifically, the image-capturing device 1001 has a step 11a in the casing 11. With the step 11a on the casing 11 of the image-capturing device 1001, the ToF light receiver 61 and the light emitter 21 form a step therebetween in the optical system. The image-capturing device 1001 including the step 11a in the casing 11 blocks incident light at an angle of view of -60 degrees or less from the ToF light receiver 61, creating a blind spot. This configuration allows the ToF light receiver 61 to avoid receiving patterned light at a maximum angle of view emitted from the light emitter 21.

As illustrated in FIG. 9-2C, in the case of the short-distance measurement where DId is 0.5 or greater, the image-capturing device 1001 having a blind spot at an angle of view of -60 degrees or less for the ToF light receiver 61 conceals an area where the pitch between adjacent dot images at an angle of view of -60 degrees or less for the ToF light receiver 61 becomes less than one pixel. This configuration excludes the dot images that are not separated from the image received by the ToF light receiver 61 and thus eliminates identifying an area with no non-illumination on the ToF sensor 110 of the ToF light receiver 61 to exclude the identified area from data.

The casing 11 of the image-capturing device 1001 is preferably made of a material that easily absorbs light with wavelengths of, for example, 850 nanometers (nm) or 940 nm, which is emitted from the light emitter 21 and falls outside the visible spectrum. The casing 11 of the image-capturing device 1001 is made of, for example, an aluminum alloy subjected to matte black anodizing treatment. The image-capturing device 1001, which is made of such a material that easily absorbs light of wavelengths emitted from the light emitter 21, enhances its thermal dissipation to the external environment, potentially reducing the temperature rise of heat-generating components inside.

In some embodiments, the casing 11 of the image-capturing device 1001 is subjected to surface treatment to enhance its absorption of light of wavelengths emitted from the light emitter 21, instead of forming the casing 11 with such a material as described above. For example, the casing 11 is applied with blackbody tape or coated with blackbody paint.

In the present embodiment, the image-capturing device 1001 is designed to have the step 11a in the casing 11 to create a blind spot for the ToF light receiver 61. Alternatively, another method is employed to block light at angles of view that create a blind spot. For example, as an alternative method, for the image-capturing device 1001 as illustrated in FIG. 9-1, the center of the ToF sensor 110 in the ToF light receiver 61 is offset in the Z-direction to prevent light from angles of view that create a blind spot from entering the light-receiving area of the ToF sensor 110.

For example, when a desired distance image is intended to be acquired at a distance D of 50 millimeters (mm) or more from the image-capturing device 1001, which has a blind spot at an angle of view of -60 degrees or less for the ToF sensor 110, the distance d between the ToF light receiver 61 and the light emitter 21 is set to be 100 mm. This satisfies the device size requirement of the image-capturing device 1001, i.e., DId ≥ 0.5.

Further, as for the size of the image-capturing device 1001, the grip 14 as illustrated in FIG. 6B can be stably gripped by one hand when the grip 14 is, for example, a rectangular column having a thickness of about 40 mm × 30 mm in cross-section, a cylindrical column having a diameter of about ϕ40, or an oval shape similar to such shapes.

In the image-capturing device 1001 according to the present embodiment, an angle of view of -60 degrees is set as the threshold for the blind spot of the ToF light receiver 61. However, this threshold varies depending on, for example, the optical design, the intended DId ratio, or the pixel size of the ToF sensor 110.

FIG. 11 is a graph of the relation between the ToF angle of view and the DId ratio according to an embodiment of the present disclosure. More specifically, FIG. 11 presents the DId ratio and the ToF angle of view for a minimum dot pitch on the ToF sensor 110 of the ToF light receiver 61, assuming that the optical system of the ToF light receiver 61 is a fθ lens or a lens equivalent thereto.

FIGS. 9-2A to 9-2C are graphs presenting changes in pitch between adjacent dot images formed on the ToF sensor 110 when DId ratios are set to 0.5, 1, and 2. FIGS. 9-2A to 9-2C demonstrate that the minimum values occur at about -67 degrees for a DId ratio of 0.5, about -57 degrees for a DId ratio of 1, and about -50 degrees for a DId ratio of 1. FIG. 11 illustrates the changes in pitch that yield the minimum values presented in FIGS. 9-2A to 9-2C.

In the ToF light receiver 61, the angle of view at which multiple dot light rays overlap on a single pixel changes with the size of the pixels on the ToF sensor 110. Since the dot images are most likely to overlap at the angle of view at which the pitch between adjacent dot images is minimal, angles of view less than that angle of view are typically blocked.

As presented in FIG. 11, the angle of view at which the pitch between adjacent dot images is minimal does not exceed -40 degrees. Although omitted in FIG. 11, the angle of view at which the pitch between adjacent dot images is minimal is approximately -42 degrees, even when the distance D is infinity (DId = ∞). In view of this, the threshold is approximately -42 degrees at most, and blocking beyond that angle often leads to the unwanted reduction of information in the distance image.

The image-capturing device 1001 rarely performs distance measurement at a ultrashort distance where DId is less than 0.5 (DId < 0.5) level in practice. The image-capturing device 1001 often achieves a sufficient number of pixels in the pitch between dots when the DId ratio exceeds 5 (D/d > 5). In view of the above, as illustrated in FIG. 11, the image-capturing device 1001 is designed to have a threshold of the angle of view for the blind spot, which preferably ranges from approximately -67 to -46 degrees.

As described above, according to the present embodiment, when light corresponding to areas with an excessively high distribution of patterned structured light (for example, dot pattern) is present outside the angle of view for actual use, dot pattern light rays, which are excessively close to each other, in the angle of view are eliminated. With this configuration, in a ToF image-capturing device with an illumination unit that emits dot pattern light and a light receiver having their optical axes misaligned, areas where the dot pattern light received by the light receiver is excessively concentrated can be eliminated within the field of view intended for distance measurement, and distance information can be accurately acquired.

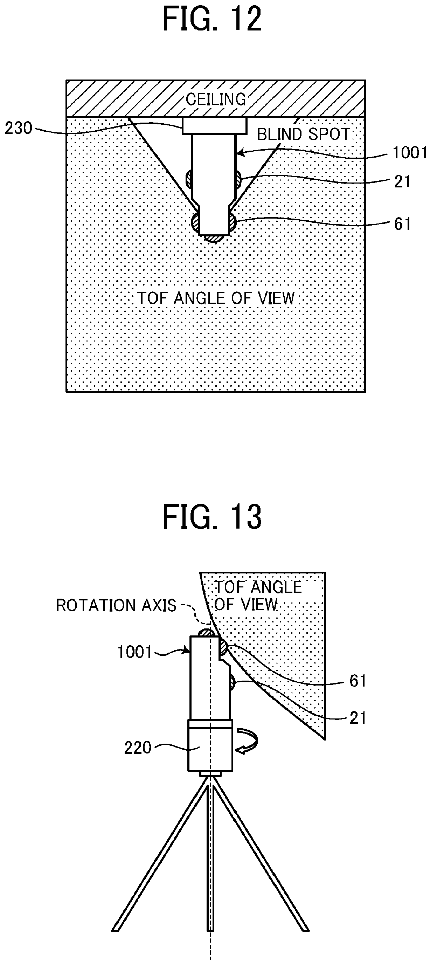

In the present embodiment, the image-capturing device 1001 includes the tool 200 (see FIG. 6A) such as a tripod serving as a support and the grip 14 (see FIG. 6B) gripped by the hand of a user. However, no limitation is intended therein. FIG. 12 is a diagram of a support of an image-capturing device 1001 according to another embodiment of the present disclosure. As illustrated in FIG. 12, for example, an attachment section 230 is used as a support for fixing or attaching the image-capturing device 1001 onto the ceiling of a building. The image-capturing device 1001 fixed or attached onto the ceiling can be used as a range finder for an indoor space.

Further, in the present embodiment, the image-capturing device 1001 includes optical elements, which are arranged symmetrically along the Y-axis, facing in the +Y-direction and the -Y-direction (e.g., the ToF light receiver 61 and the luminance light receiver 30), to acquire a distance image covering the entire circumference of the device as illustrated in FIG. 9-1. However, no limitation is intended therein. FIG. 13 is a diagram of the arrangement of the optical elements in an image-capturing device 1001 according to another embodiment of the present disclosure. As illustrated in FIG. 13, the image-capturing device 1001 includes optical elements (e.g., a ToF light receiver 61 and a luminance light receiver 30), for example, on one side alone. As illustrated in FIG. 13, the image-capturing device 1001 includes a rotator 220, such as a rotating table driven by, for example, an electric motor, positioned above the attachment section 19 for attaching a tool 200 such as a tripod serving as a support. In this configuration, the image-capturing device 1001 acquires a distance image of the entire circumference while rotating the apparatus itself by the rotator 220.

In the present embodiment, the light emitter 21 emits dot-pattern light as an emission pattern. However, no limitation is intended therein. Alternatively, the light emitter 21 emits light in any pattern such as a random dot pattern or a stripe pattern with an irregular dot arrangement.

### Second Embodiment

A second embodiment of the present disclosure is described below.

The second embodiment is different from the first embodiment in that the light emitter 21 is closer to the ToF light receiver 61 than the luminance light receiver 30 is. Like reference signs are given to elements similar to those described in the first embodiment, and their detailed description is omitted in the description of the second embodiment of the present disclosure given below.

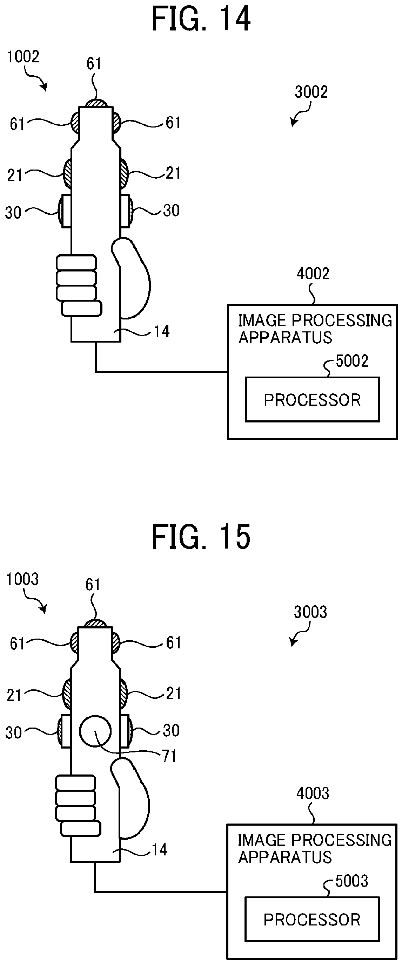

FIG. 14 is a diagram of a system configuration of a distance-measuring system 3002 including an information processing apparatus 4002 and an image-capturing device 1002 according to a second embodiment of the present disclosure. In the image-capturing device 1001 according to the first embodiment, the light emitter 21 and the luminance light receiver 30 are positioned equally close to the ToF light receiver 61. However, no limitation is indicated thereby. As illustrated in FIG. 14, the image-capturing device 1002 according to the second embodiment includes a light emitter 21 positioned at a distance that is equal to or closer than the luminance light receiver 30 relative to the ToF light receiver 61. In other words, the image-capturing device 1002 according to the second embodiment includes a light emitter 21 positioned at a distance from the ToF light receiver 61 that is equal to or closer than the distance between the luminance light receiver 30 and the ToF light receiver 61.

This configuration according to the present embodiment allows a reduced parallax between the ToF light receiver 61 and the light emitter 21. This achieves a reduction in the uneven distribution of dots that occurs when the patterned light emitted from the light emitter 21 is received by the ToF sensor 110 of the ToF light receiver 61 (see FIG. 8-2).

### Third Embodiment

A third embodiment is described below.

The third embodiment is different from the second embodiment in that an image-forming device includes a uniform lighting device that emits light over the entire surrounding area. Like reference signs are given to elements similar to those described in the second embodiment, and their detailed description is omitted in the description of the third embodiment of the present disclosure given below.

FIG. 15 is a diagram of a system configuration of a distance-measuring system 3003 including an information processing apparatus 4003 and an image-capturing device 1003 according to a third embodiment of the present disclosure. As illustrated in FIG. 15, the image-capturing device 1003 according to the third embodiment further includes a uniform lighting device 71 in addition to the configuration described for the second embodiment. The uniform lighting device 71 serves as a second light emitter to emit uniform-intensity diffused light to the entire surrounding area of the casing 11, so as to acquire distance information on areas between dots of dot pattern light emitted from the light emitter 21.

In the image-capturing device 1003 according to the present embodiment uses the uniform lighting device 71 to emit diffused light to the entire surrounding area. The distance image obtained through the diffused light emitted from the uniform lighting device 71 has an illuminance lower than the concentrated light from the light emitter 21. This results in a reduced accuracy of long-distance measurement. However, the image-capturing device 1003 according to the present embodiment emits uniform-intensity diffused light to the entire surrounding area of the casing 11 using the uniform lighting device 71. The uniform-intensity diffused light emitted from the uniform lighting device 71 is used as information to interpolate the distance and shape information of areas that are blank between dots of dot pattern light emitted from the light emitter 21.

As illustrated in FIG. 15, the light emitter 21 is immediately adjacent to the ToF light receiver 61. This arrangement reduces the uneven distribution of dots that occurs when the patterned light emitted from the light emitter 21 is received by the ToF sensor 110 in the ToF light receiver 61.

As illustrated in FIG. 15, the image-capturing device 1003 according to the present embodiment includes the ToF light receiver 61, the light emitter 21, the luminance light receiver 30, the uniform lighting device 71, and the grip 14, which are sequentially arranged. In the image-capturing device 1003 with such a configuration, the light emitter 21 and the uniform lighting device 71, which easily heat up, are spaced apart to facilitate the dispersion of temperature increases of the image-capturing device 1003.

The configuration of the present embodiment allows the acquisition of distance information of the blank areas between dots of dot pattern light emitted from the light emitter 21 and also reduces the temperature increases of the image-capturing device 1003.

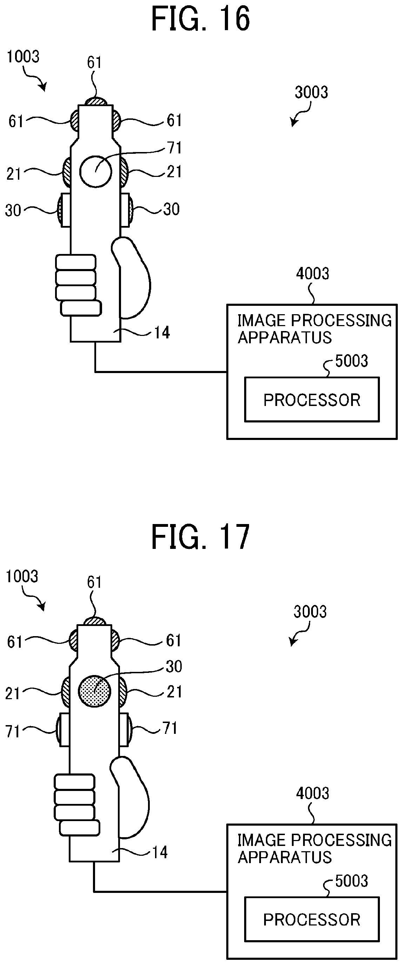

FIG. 16 is a diagram of a configuration of an image-capturing device 1003 according to a modification of the third embodiment of the present disclosure. In the image-capturing device 1003 as illustrated in FIG. 16, the light emitter 21 and the uniform lighting device 71 are located in close proximity to the ToF light receiver 61. The light emitter 21 and the uniform lighting device 71 are positioned at a distance that is equal to the ToF light receiver 61. Alternatively, either one of the light emitter 21 and the uniform lighting device 71 is positioned closer to the ToF light receiver 61 than the other. Further, the luminance light receiver 30 is located between the grip 14 and the light emitter 21 or the uniform lighting device 71 in the image-capturing device 1003. In the image-capturing device 1003 with such a configuration, the light emitter 21 and the uniform lighting device 71, which easily heat up, are spaced apart from the grip 14. This can reduce the risk of, for example, burns caused by temperature increases in the parts that are touched by hand.

FIG. 17 is a diagram of a configuration of an image-capturing device 1003 according to another modification of the third embodiment in FIG. 15. In the image-capturing device 1003 as illustrated in FIG. 17, the light emitter 21 and the luminance light receiver 30 are located in close proximity to the ToF light receiver 61. The light emitter 21 and the luminance light receiver 30 are positioned at a distance that is equal to the ToF light receiver 61. Alternatively, either one of the light emitter 21 and the luminance light receiver 30 is positioned closer to the ToF light receiver 61 than the toher. Further, the uniform lighting device 71 is located between the grip 14 and the light emitter 21 or the luminance light receiver 30. Further, the uniform lighting device 71 is located between the grip 14 and the light emitter 21 or the luminance light receiver 30. In other words, in the image-capturing device 1003, both the light emitter 21 and the luminance light receiver 30 are close to the ToF light receiver 61 to minimize parallax therebetween. This positions the uniform lighting device 71 at the farthest distance from the ToF light receiver 61, allowing the uniform lighting device 71 to emit uniform-intensity light to the entire surrounding area without the effect of parallax.

The luminance light receiver 30 and the uniform lighting device 71 may be arranged in combinations different from those illustrated in FIGS. 15 to 17 as long as the light emitter 21 is positioned at a distance that is equal to or closer than the distance from the luminance light receiver 30 and the uniform lighting device 71 to the ToF light receiver 61 (i.e., the light emitter 21 is positioned at a distance that is equal to or closer than the luminance light receiver 30 and the uniform lighting device 71 relative to the ToF light receiver 61).

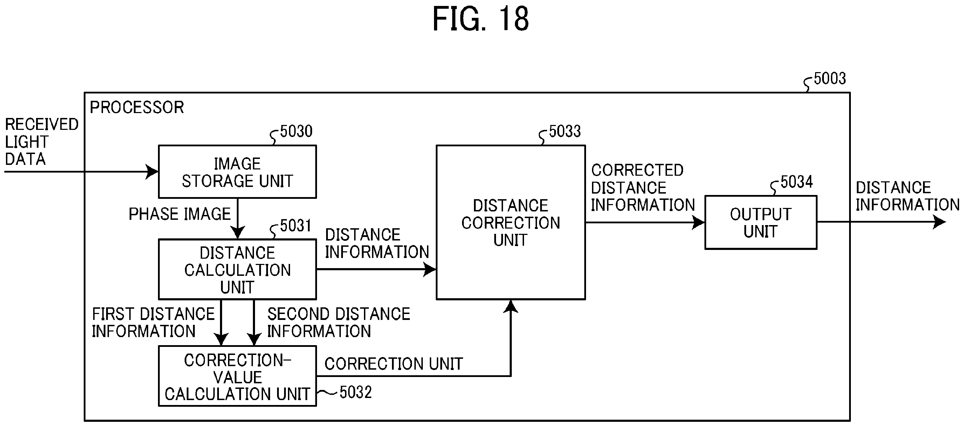

FIG. 18 is a block diagram of a functional configuration of the processor 5003 according to the third embodiment that calculates the distance to a target object based on light data received by the ToF light receiver 61. As illustrated in FIG. 18, the processor 5003 implements an image storing unit 5030, a distance calculation unit 5031, a correction-value calculation unit 5032, a distance correction unit 5033, and an output unit 5034.

The image storing unit 5030 stores light data (e.g., multiple phase images created based on the light data) received by the ToF light receiver 61 in a storage unit such as the RAM. The distance calculation unit 5031 acquires distance information by calculating the distance to the target object based on multiple phase images stored in the storage unit by the image storing unit 5030. The correction-value calculation unit 5032 calculates a correction value for correcting the distance information using first distance information and second distance information from the distance calculation unit 5031. The first distance information is obtained by the distance calculation unit 5031 through the light emission of the light emitter 21. The second distance information is obtained by the distance calculation unit 5031 through the light emission of the uniform lighting device 71. The distance correction unit 5033 corrects the first distance information obtained through the light emission of the light emitter 21, using the correction value calculated by the correction-value calculation unit 5032. In the present embodiment, the processor 5001 according to the first embodiment may be used to calculate the correction value and correct the distance, instead of using the processor 5003. In such a configuration, as described in the first embodiment, the correction-value calculation unit 5012 and the distance correction unit 5013 perform multipath reduction.

The output unit 5034 outputs distance information indicating the distance to the target object corrected by the distance correction unit 5033 to an external device.

### Fourth Embodiment

A fourth embodiment of the present disclosure is described below.

The fourth embodiment is different from the first embodiment in that the fourth embodiment is configured to reduce fluctuations due to the hand-held shake of the light emitter 21. Like reference signs are given to elements similar to those described in the first embodiment, and their detailed description is omitted in the description of the fourth embodiment of the present disclosure given below.

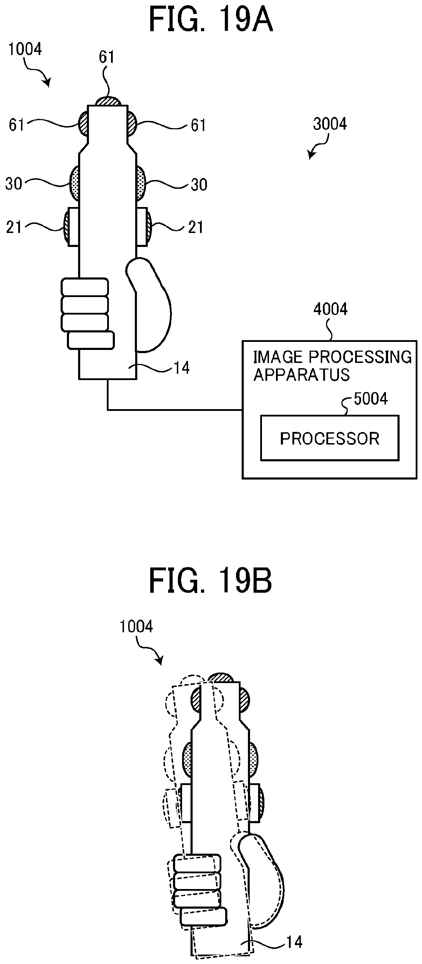

FIGS. 19A and 19B are diagrams of a system configuration of a distance-measuring system 3004 including an information processing apparatus 4004 and an image-capturing device 1004 according to a fourth embodiment of the present disclosure. In the image-capturing device 1004 according to the first embodiment, the light emitter 21 and the luminance light receiver 30 are positioned at a distance that is equal to the ToF light receiver 61. Alternatively, either one of the light emitter 21 and the luminance light receiver 30 is closer to the ToF light receiver 61 than the other. However, no limitation is intended therein. As illustrated in FIG. 19A, the image-capturing device 1004 according to the present embodiment includes a luminance light receiver 30 between a ToF light receiver 61 and a light emitter 21. In other words, in the image-capturing device 1004 according to the present embodiment, the light emitter 21 is located near the grip 14.

In this configuration, as illustrated in FIG. 19B, the fluctuations due to the hand-held shake of the light emitter 21 are smaller than those of the ToF light receiver 61 and the luminance light receiver 30 during the hand-held shake.

The image-capturing device 1004 may experience hand-held shake when being held by hand at the grip 14 during shooting. Particularly, when multiple shots are taken and integrated during a single acquisition of a distance image by the light emitter 21 (for example, by averaging the results of multiple shots, or by integrating information after shooting with lower light-source output for short distances and higher output for long distances), the light emitter 21 is the component that is most significantly affected by hand-held shake.

The effects of the hand-held shake are described below, particularly in the case of the light emitter 21 that emits dot-pattern light.

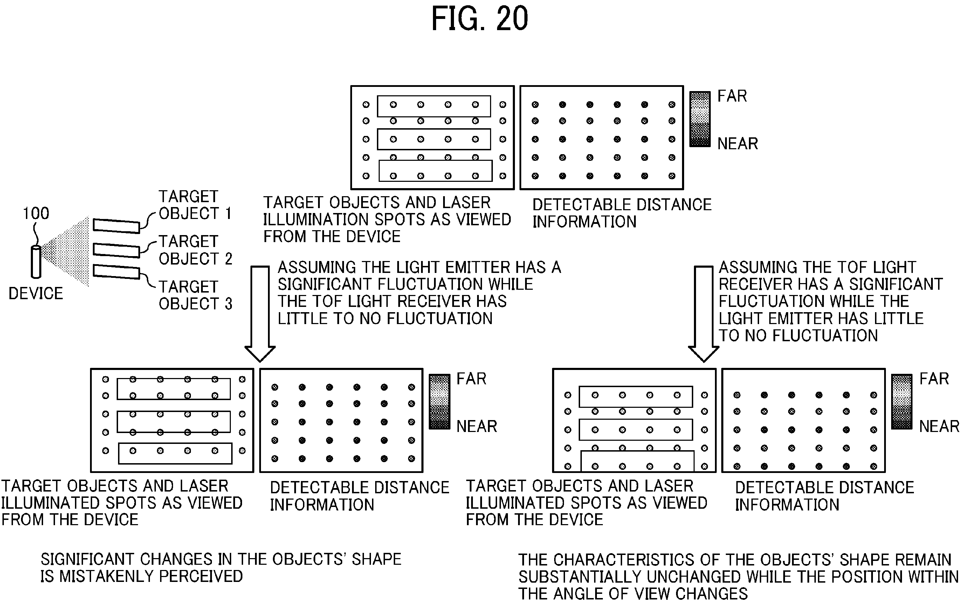

FIG. 20 is a diagram of the effects of the hand-held shake according to an embodiment of the present disclosure. The distance information with a favorable signal-to-noise (S/N) ratio can only be obtained from the areas (or illuminated spots) where the dot pattern light is emitted from the light emitter 21. In such a situation where the illuminated spots are sparse and localized, hand-held shake during shooting causes significant fluctuation in the illumination pattern from the light emitter 21. As the illuminated spots change with such significant fluctuations of the illumination pattern from the light emitter 21, as illustrated in FIG. 20, the shape of the measurement target object might seem to have significantly changed. As a result, the shape characteristics of the measurement target object might not match in the multiple images captured during the acquisition of a single distance image, leading to a degradation in the quality of the integrated distance image.

By contrast, in the ToF light receiver 61, changes in image position as seen from the ToF light receiver 61, due to hand-held shake, have little effect on the shape information of the target objects (i.e., the shape information of the target objects remains almost unchanged) if minimal fluctuation occurs in the illumination position by the light emitter 21. Thus, shake correction can be applied afterward based on, for example, the extracted characteristic points.

In the luminance light receiver 30, the influence of the hand-held shake can be reduced to some extent by using typical shake correction. In view of the above, fluctuations caused by the hand-held shake in the light emitter 21 are reduced with the highest priority.

For the above reason, in the image-capturing device 1004 according to the present embodiment, the light emitter 21 is placed close to the grip 14, which exhibits minimal fluctuation due to hand-held shake.

As described above, according to the present embodiment, the fluctuation of the light emitter 21 due to the hand-held shake is reduced.

### Fifth Embodiment

A fifth embodiment of the present disclosure is described below.

The fifth embodiment is different from the fourth embodiment in that an image-forming device includes a uniform lighting device that emits light over the entire surrounding area. Like reference signs are given to elements similar to those described in the fourth embodiment, and their detailed description is omitted in the description of the fifth embodiment of the present disclosure given below.

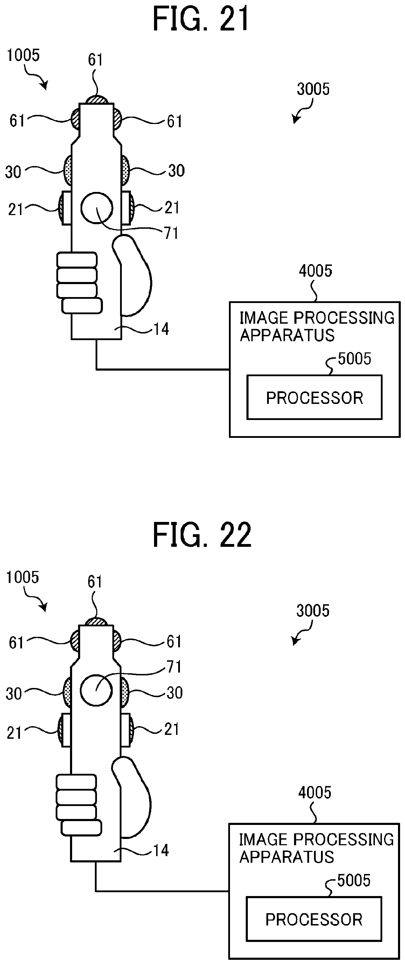

FIG. 21 is a diagram of a system configuration of a distance-measuring system 3005 including an information processing apparatus 4005 and an image-capturing device 1005 according to a fifth embodiment of the present disclosure. As illustrated in FIG. 21, the image-capturing device 1005 according to the fifth embodiment further includes a uniform lighting device 71 in addition to the configuration described for the fourth embodiment. The uniform lighting device 71 serves to emit light to the entire surrounding area of the casing 11, so as to acquire distance information on areas between dots of dot pattern light emitted from the light emitter 21.

The image-capturing device 1005 according to the present embodiment uses the uniform lighting device 71 to emit light to the entire surrounding area. The distance image obtained through the light emitted from the uniform lighting device 71 has an illuminance lower than the concentrated light from the light emitter 21. This results in a reduced accuracy of long-distance measurement. However, the image-capturing device 1005 according to the present embodiment emits light to the entire surrounding area of the casing 11 using the uniform lighting device 71. The light emitted from the uniform lighting device 71 is used as information to interpolate the distance and shape information of areas that are blank between dots of dot pattern light emitted from the light emitter 21.

As illustrated in FIG. 21, the image-capturing device 1005 according to the present embodiment includes the ToF light receiver 61, the luminance light receiver 30, the light emitter 21, the uniform lighting device 71, and the grip 14, which are sequentially arranged.

In the image-capturing device 1005 according to the present embodiment, the light emitter 21 and the uniform lighting device 71 are placed at the lowest stage among the optical elements. With this arrangement, the wiring from the power supply incorporated in the grip 14 to the light source within the light emitter 21 and the uniform lighting device 71 can be minimized. This minimizes the emission delay as much as possible.

FIG. 22 is a diagram of a configuration of an image-capturing device 1005 according to a modification of the fifth embodiment of the present disclosure. In the image-capturing device 1005 as illustrated in FIG. 22, the luminance light receiver 30 and the uniform lighting device 71 are positioned immediately adjacent to the ToF light receiver 61, at a distance that is equal to or closer than that from the ToF light receiver 61. Further, the light emitter 21 is located between the grip 14, and the luminance light receiver 30 and the uniform lighting device 71 in the image-capturing device 1005. In the image-capturing device 1005 with such a configuration, the light emitter 21 and the uniform lighting device 71, which easily heat up, are spaced apart to facilitate the dispersion of temperature increases of the image-capturing device 1005.

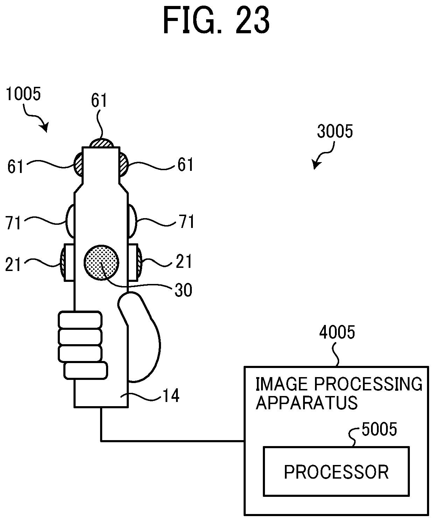

FIG. 23 is a diagram of a configuration of an image-capturing device 1005 according to another modification of the fifth embodiment in FIG. 23. As illustrated in FIG. 23, the image-capturing device 1005 according to the present embodiment includes the ToF light receiver 61 and the uniform lighting device 71, which are sequentially located. Following these, in the next stage, the light emitter 21 and the luminance light receiver 30 are placed close to the grip 14. In other words, the image-capturing device 1005 is designed to include the light emitter 21 and the luminance light receiver 30, which are placed close to the grip 14. This configuration achieves a reduction in the amount of hand-held shake for both the light emitter 21 and the luminance light receiver 30 in the image-capturing device 1005. Further, the image-capturing device 1005 with this configuration reduces blur due to the hand-held shake even when the exposure time of the luminance light receiver 30 is extended.

The luminance light receiver 30 and the uniform lighting device 71 may be arranged in combinations different from those illustrated in FIGS. 21 to 23 as long as the light emitter 21 is positioned at a distance that is equal to or closer than the distance from the luminance light receiver 30 and the uniform lighting device 71 to the grip 14 (i.e., the light emitter 21 is positioned at a distance that is equal to or closer than the luminance light receiver 30 and the uniform lighting device 71 relative to the grip 14).

### Sixth Embodiment

A sixth embodiment is described below.

The sixth embodiment is different from the first to fifth embodiments in that an image-capturing device 1006 according to the sixth embodiment includes a light shield that blocks a part of the light-emission range of the light emitter 21.

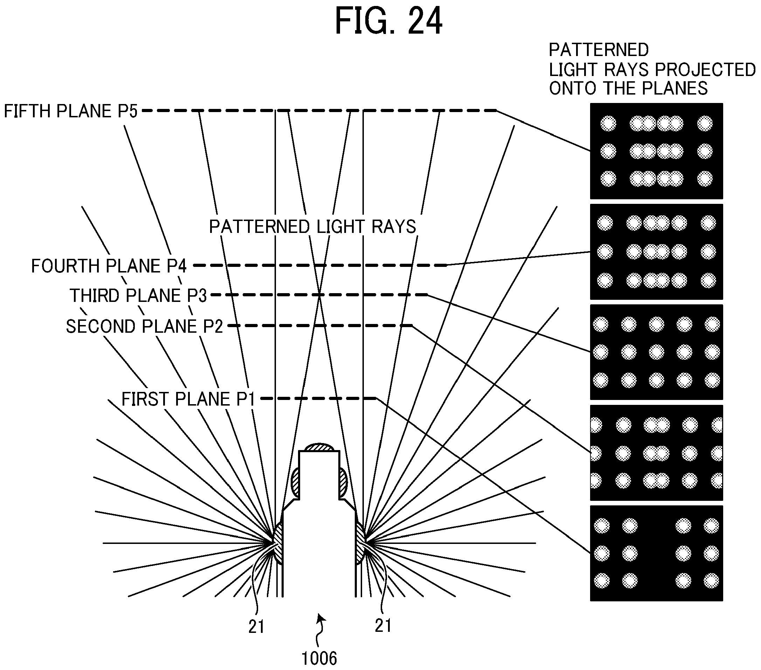

FIG. 24 is a diagram of the overlap of patterned light rays emitted from light emitters 21 in the image-capturing device 1006. When the patterned light rays are dot pattern light rays, the dot pattern light rays are separated from each other on a first plane P1 where the light-emission ranges do not overlap. However, interference between excessively close dot light rays is observed at a distance farther than a second plane P2, which is a long distance from the image-capturing device 1006. In a third plane P3, dot rays exactly overlap each other, and thus the dot pattern presents the desirable pattern as described above. However, for example, in a fourth plane P4 and a fifth plane P5, the excessively close dot light rays interfere with each other, which hampers forming a dot pattern suitable for extracting accurate distance information.

In order to avoid such circumstances, the image-capturing device according to the present embodiment includes a light shield that blocks a portion of patterned light emitted from the light emitter 21 to prevent the overlap of the light-emission range in a desired image-capturing area.

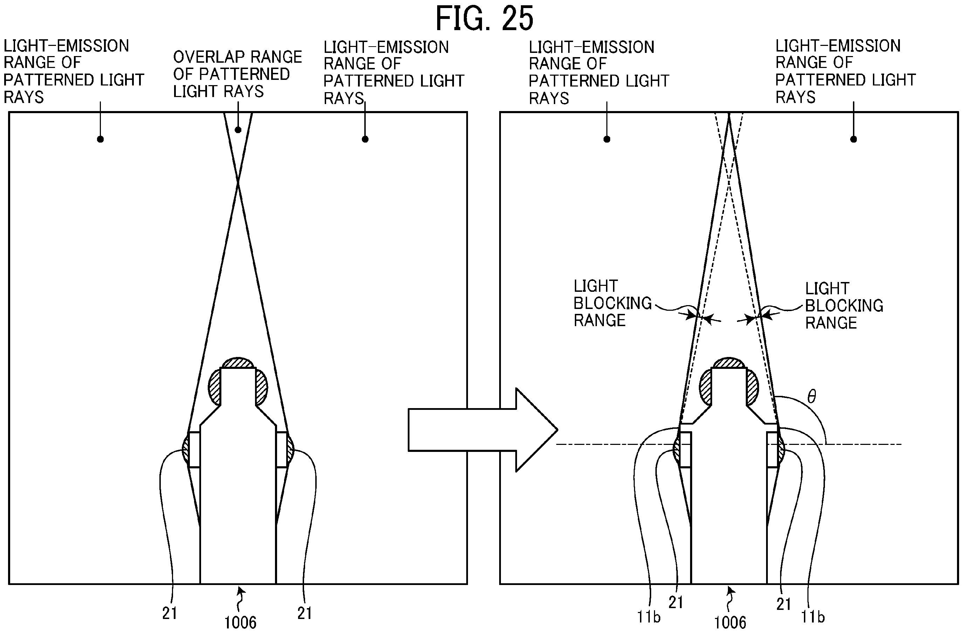

FIG. 25 is a diagram of a light shield according to a sixth embodiment of the present disclosure. As an example of the light shield, a casing 11 has a light-blocking shape 11b as illustrated on the right side of FIG. 25, unlike a configuration on the left side of FIG. 25. This configuration on the right side of FIG. 25 blocks a portion of patterned light emitted upward from the light emitter 21. The portion of such patterned light refers to a light-blocking range. The overlapping range of patterned light rays is changed by setting the protrusion of the light-blocking shape 11b to any desired amount, addressing the challenges associated with the overlap of the light-emission range for the patterned light rays at desired distances. In this configuration, the protrusion amount of the light-blocking shape 11b on both the left and right sides is less than the length at which the distribution angle θ of the light emitter 21 becomes 90 degrees or less. The pattern light rays do not overlap to infinity when the distribution angle is 90 degrees.

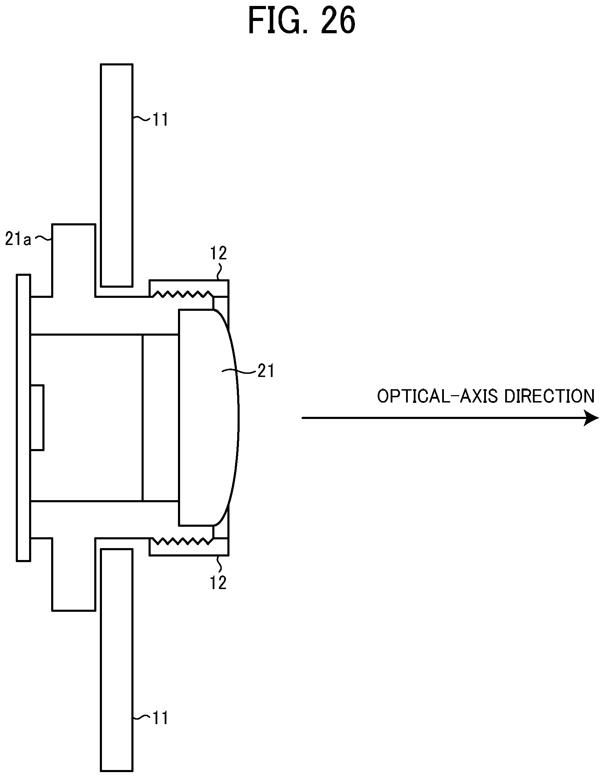

FIG. 26 is a diagram of a light shield according to a modification of the sixth embodiment. FIG. 26 is also a cross-sectional view of the periphery of the light emitter 21 of the image-capturing device 1006 in FIG. 24. As another example of the light shield, a ring 12 is attached to the outer circumference of the barrel of the optical system 21a as illustrated in FIG. 26. The ring 12 allows blocking of a part of the light-emission range of the light emitter 21.

According to the present embodiment, the light-blocking range for the patterned light is adjusted by moving the ring 12 in the optical-axis direction of the light emitter 21. Further, as illustrated in FIG. 26, for example, the inner periphery of the ring 12 is formed as a female screw, and the outer periphery of the lens barrel of the optical system 21a is formed as a male screw. In this configuration where the ring 12 and the optical system 21a are threaded together, the ring 12 moves forward and backward along the optical axis through its rotation. This facilitates fine control over the light-blocking range for the patterned light.

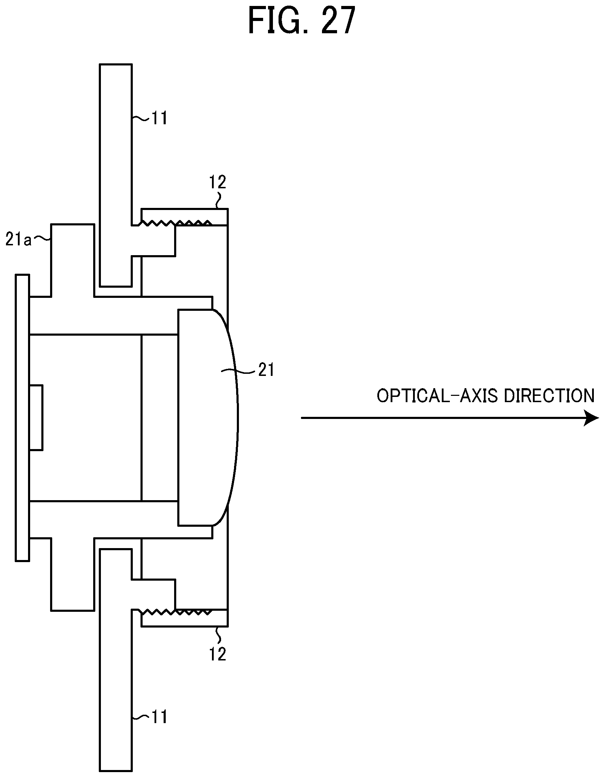

FIG. 27 is a diagram of a light shield according to another modification of the sixth embodiment. As illustrated in FIG. 27, instead of directly fixing a ring 12 to the outer circumference of the barrel of the optical system 21a, a cylindrical protrusion is attached to the outer periphery of the light emitter 21, which is adjacent to the casing 11 for the fixation of the light emitter 21. The ring 12 is attached to the protrusion. This configuration also achieves effects similar to those of the sixth embodiment.

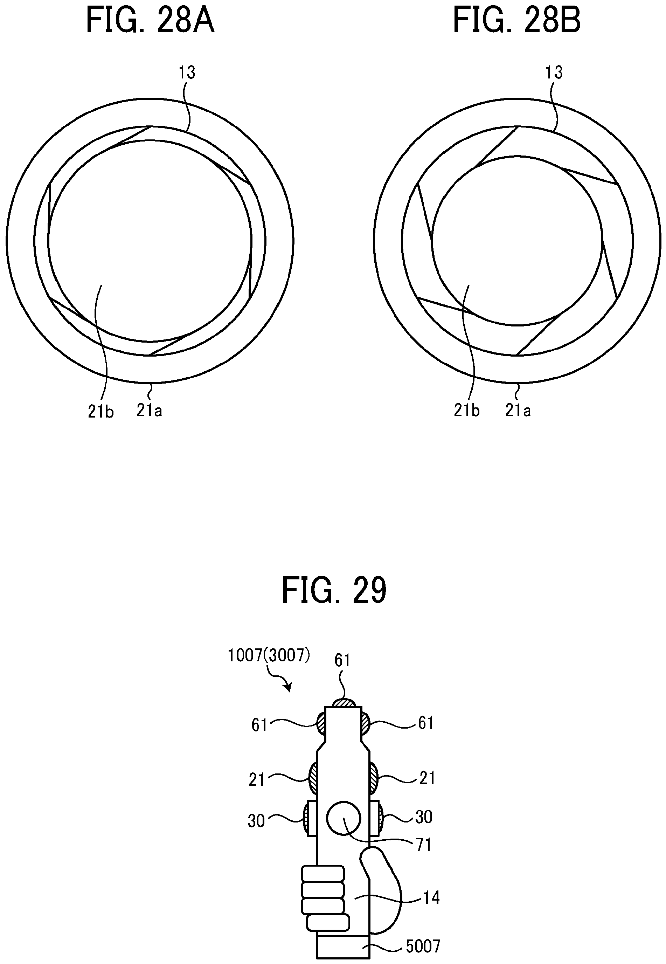

FIGS. 28A and 28B are diagrams of a light shield according to still another modification of the sixth embodiment. FIGS. 28A and 28B are cross-sectional views of the light emitter 21 as viewed in the optical-axis direction. As still another example of the light shield, as illustrated in FIGS. 28A and 28B, an aperture blade 13 is attached inside the optical system 21a. The aperture blade 13 blocks a part of the light-emission range of the light emitter 21.

The aperture blade 13 can adjust the size of an aperture 21b by opening and closing. When the aperture blade 13 opens, the aperture 21b increases as illustrated in FIG. 28A. When the aperture blade 13 closes, the aperture 21b decreases as illustrated in FIG. 28B. In this configuration, opening and closing the aperture blade 13 can adjust the size of the light-blocking range on the outer periphery of the light-emission range of the light emitter 21.

### Seventh Embodiment

A seventh embodiment is described below.

The seventh embodiment is different from the first to sixth embodiments in that an image-capturing device 1007, which includes a processor 5007, serves as a distance-measuring system 3007. Like reference signs are given to elements similar to those described in the sixth embodiment, and their detailed description is omitted in the description of the seventh embodiment of the present disclosure given below.

FIG. 29 is a diagram of a configuration of the image-capturing device 1007 according to the seventh embodiment of the present disclosure, which serves as the distance-measuring system 3007. As illustrated in FIG. 29, the image-capturing device 1007 is a distance-measuring apparatus including a processor 5007.

The processor 5007 includes a CPU, a ROM, a RAM, and an SSD of the image-capturing device 1007. The processor 5007 functions similarly to the processor 5001 of the information processing apparatus 4001 according to the first embodiment.

According to the present embodiment, in a ToF image-capturing device where an illumination unit emitting dot pattern light and a light receiver have misaligned optical axes, areas within the field of view intended for distance measurement can be excluded, where the dot pattern light received by the light receiver is overly concentrated. This allows for the output of accurate distance information.

In the present embodiment, the image-capturing device 1003, which includes the light emitter 21 and the uniform light device 71, according to the third embodiment further includes the processor 5007. Alternatively, in the present embodiment, the image-capturing device 1001, which includes the light emitter 21, according to the first embodiment further includes the processor 5007.

The following describes aspects of the present disclosure.

### Aspect 1

An image-capturing device includes: a casing; a first light emitter to emit structured light to a target object; a first light receiver to receive light including the structured light emitted from the first light emitter and reflected from the target object; and a support to support the image-capturing device. The first light emitter, the first light receiver, and the support are sequentially positioned in a direction of the casing.

### Aspect 2

The image-capturing device according to Aspect 1, the first light receiver captures an image covering 360 degrees around the direction.

### Aspect 3

The image-capturing device according to Aspect 1, further includes: multiple first light emitters including the first light emitter; and multiple first light receivers including the first light receiver. The multiple first light emitters and the multiple first light receivers are disposed around the direction of the casing.

### Aspect 4

The image-capturing device according to Aspect 1, the first light receiver has a non-image capturing area covering the first light emitter and the support.

### Aspect 5

The image-capturing device according to Aspect 1, the casing has a step between the first light emitter and the first light receiver to form a blind spot that prevents the structured light emitted from the first light emitter from directly entering the first light receiver.

### Aspect 6

The image-capturing device according to Aspect 1, further includes a second light receiver to capture a luminance image. The first light emitter is positioned at a distance that is equal to or closer than a distance from the second light receiver to the first light receiver.

### Aspect 7

The image-capturing device according to Aspect 6, further includes a second light emitter to emit diffused light with a uniform intensity to an entire surrounding area of the casing. The first light emitter is positioned at a distance that is equal to or closer than a distance from the second light emitter and the second light receiver to the first light receiver.

### Aspect 8

The image-capturing device according to Aspect 1, further includes a second light receiver to capture a luminance image. The first light emitter is positioned at a distance that is equal to or closer than a distance from the second light receiver to the support.

### Aspect 9

The image-capturing device according to Aspect 6, further includes a second light emitter to emit diffused light with a uniform intensity to an entire surrounding area of the casing. The first light emitter is positioned at a distance that is equal to or closer than a distance from the second light emitter and the second light receiver to the support.

### Aspect 10

The image-capturing device according to Aspect 1, further includes: multiple first light emitters including the first light emitter; and a light shield. The multiple first light emitters include: one first light emitter to emit first light to a first light-emission range; and another first light emitter to emit second light to a second light-emission range, the first light-emission range including an overlapping area with the second light-emission range. The light shield blocks at least parts of the first light and the second light, from entering the overlapping area.

### Aspect 11

A distance-measuring system includes: the image-capturing device according to any one of Aspects 1 to 10; and a processor to calculate a distance to the target object based on the structured light received by the first light receiver.

### Aspect 12

A distance-measuring device comprising the image-capturing device according to any one of Aspects 1 to 10 including a processor to calculate a distance to the target object based on the structured light received by the light receiver.

### Aspect 13

An image-capturing device includes: a casing elongated in one direction; a light receiver on one end of the casing in said one direction; a support on another end of the casing in said one direction; and a light emitter between the light receiver and the support in said one direction of the casing, to emit patterned light to a target object. The light receiver receives the patterned light reflected from the target object.

### Aspect 14

The image-capturing device according to Aspect 113, the light receiver is capturable an image covering 360 degrees around the casing in a plane orthogonal to said one direction.

### Aspect 15

The image-capturing device according to Aspect 114, further includes: multiple light emitters including the light emitter; and multiple light receivers including the light receiver. The multiple light emitters are around the casing in a first plane orthogonal to said one direction. The multiple light receivers are around the casing in a second plane different from the first plane in said one direction and orthogonal to said one direction.

### Aspect 16

The image-capturing device according to Aspect 13, the light receiver has a blind spot in a non-image capturing area covering the light emitter and the support.

### Aspect 17

The image-capturing device according to Aspect 13, the casing has a step between the light emitter and the light receiver in said one direction, to form a blind spot at which the patterned light emitted from the light emitter does not directly enter the light receiver. Aspect 18

The image-capturing device according to Aspect 13, further comprising another light receiver to capture a luminance image,
wherein the light emitter is equal to or closer than said another light receiver relative to the light receiver in said one direction.

### Aspect 19

The image-capturing device according to Aspect 18, further includes another light emitter to emit diffused light with a uniform intensity to an entire surrounding area of the casing. The light emitter is equal to or closer than said another light emitter and said another light receiver relative to the light receiver in said one direction.

### Aspect 20

The image-capturing device according to Aspect 13, further includes another light receiver to capture a luminance image. The light emitter is equal to or closer than said another light receiver relative to the support in said one direction.

### Aspect 21

The image-capturing device according to Aspect 18, further includes another light emitter to emit diffused light with a uniform intensity to an entire surrounding area of the casing. The light emitter is equal to or closer than said another light emitter and said another light receiver relative to the support in said one direction.

### Aspect 22

The image-capturing device according to Aspect 13, further includes: a light shield and multiple light emitters including: a first light emitter to emit first light to a first light-emission range; and a second light emitter to emit second light to a second light-emission range. The first light-emission range includes an overlapping area overlapped with the second light-emission range. The light shield blocks at least parts of the first light and the second light, from entering the overlapping area.

### Aspect 23

A distance-measuring system includes: the image-capturing device according to Aspect 13; and a processor configured to calculate a distance to the target object based on the patterned light received by the light receiver.

### Aspect 24

A distance-measuring device comprising the image-capturing device according to Aspect 13 including a processor to calculate a distance to the target object based on the patterned light received by the light receiver.

Although some embodiments of the present disclosure have been described above, the above-described embodiments are presented as examples and are not intended to limit the scope of the present invention.

Numerous additional modifications are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. In addition, the embodiments and modifications or variations thereof are included in the scope and the gist of the invention, and are included in the invention described in the claims and the equivalent scopes thereof. Further, elements according to varying embodiments or modifications may be combined as appropriate.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor-readable code, such as a floppy disk, a hard disk, a compact disc read-only memory (CD-ROM), a magnetic tape device, or a solid-state memory device.

## Claims

1. An image-capturing device (1001) comprising:
a casing (11) elongated in one direction;
a light receiver (61) on one end of the casing in said one direction,
a support (14) on another end of the casing in said one direction; and
a light emitter (21) between the light receiver (61) and the support (14) in said one direction of the casing, to emit patterned light to a target object,
wherein the light receiver (61) receives the patterned light reflected from the target obj ect.

2. The image-capturing device (1001) according to claim 1,
wherein the light receiver (61) is capturable an image covering 360 degrees around the casing in a plane orthogonal to said one direction.

3. The image-capturing device (1001) according to claim 2, further comprising:
multiple light emitters including the light emitter (21); and
multiple light receivers including the light receiver (61),
wherein the multiple light emitters are around the casing (11) in a first plane orthogonal to said one direction, and
the multiple light receivers are around the casing (11) in a second plane different from the first plane in said one direction and orthogonal to said one direction.

4. The image-capturing device (1001) according to claim 1,
wherein the light receiver (61) has a blind spot in a non-image capturing area covering the light emitter (21) and the support (14).

5. The image-capturing device (1001) according to claim 1,
wherein the casing (11) has a step (11a) between the light emitter (21) and the light receiver (61) in said one direction, to form a blind spot at which the patterned light emitted from the light emitter (21) does not directly enter the light receiver (61).

6. The image-capturing device (100) according to claim 1, further comprising another light receiver (30) to capture a luminance image,
wherein the light emitter (21) is equal to or closer than said another light receiver (30) relative to the light receiver (61) in said one direction.

7. The image-capturing device (1001) according to claim 6, further comprising another light emitter (71) to emit diffused light with a uniform intensity to an entire surrounding area of the casing (11),
wherein the light emitter (21) is equal to or closer than said another light emitter (71) and said another light receiver (30) relative to the light receiver (61) in said one direction.

8. The image-capturing device (100) according to claim 1, further comprising another light receiver (30) to capture a luminance image,
wherein the light emitter (21) is equal to or closer than said another light receiver (30) relative to the support (14) in said one direction.

9. The image-capturing device (1001) according to claim 6, further comprising another light emitter (71) to emit diffused light with a uniform intensity to an entire surrounding area of the casing (11),
wherein the light emitter (21) is equal to or closer than said another light emitter (71) and the another light receiver (30) relative to the support (14) in said one direction.

10. The image-capturing device (1001) according to claim 1, further comprising:
a light shield (11b),
multiple light emitters including:
a first light emitter to emit first light to a first light-emission range; and
a second light emitter to emit second light to a second light-emission range,
wherein the first light-emission range includes an overlapping area overlapped with the second light-emission range, and
the light shield (11b) blocks at least parts of the first light and the second light, from entering the overlapping area.

11. A distance-measuring system (3003) comprising:
the image-capturing device according to any one of claims 1 to 10; and
a processor (5001) to calculate a distance to the target object based on the patterned light received by the light receiver (61).

12. A distance-measuring device comprising the image-capturing device according to any one of claims 1 to 10 including a processor (5007) to calculate a distance to the target object based on the patterned light received by the light receiver (61).
